# EUROPÄISCHE PATENTSCHRIFT

(11) **EP 1 713 670 B1**
(45) Veröffentlichungstag und Bekanntmachung des Hinweises auf die Patenterteilung: **23.07.2008**
(21) Anmeldenummer: 05701512.5
(22) Anmeldetag: 13.01.2005
(51) Int. Cl.: B60S 1/24, B60S 1/04

(54) **VERFAHREN ZUM EINSTELLEN EINES WISCHWINKELS**
METHOD FOR ADJUSTING A WIPING ANGLE
PROCEDE DE REGLAGE D'UN ANGLE DE BALAYAGE

(30) Priorität: 02.02.2004 DE 102004005069
(43) Veröffentlichungstag der Anmeldung: 25.10.2006
(73) Patentinhaber: ROBERT BOSCH GMBH, 70442 Stuttgart (DE)
(72) Erfinder: KRAUS, Achim, 77815 Buehl (DE); SURKAMP, Gundolf, E-08720 Vilafranca Del Penedes (ES)
(86) Internationale Anmeldenummer: PCT/EP2005/050129
(87) Internationale Veröffentlichungsnummer: WO 2005/073040

(56) Entgegenhaltungen:
- EP-A- 0 689 976
- DE-A1- 19 746 376
- US-A- 4 157 666

## Beschreibung

### Stand der Technik

Die Erfindung geht von einem Verfahren zum Einstellen eines Wischwinkels nach dem Oberbegriff des Anspruchs 1 aus.

Ein gattungsgemäßes Verfahren ist aus dem Dokument EP-A-0 689 976 bekannt.

Von heutigen Scheibenwischeranlagen wird verlangt, dass sie ein möglichst großes Wischfeld besitzen, das möglichst die gesamte Windschutzscheibe abdeckt. Dies wird dadurch erreicht, dass mindestens ein Wischhebel der Scheibenwischeranlage eine Parkposition oder eine Umkehrlage in der Nähe der seitlichen Begrenzung und annähernd parallel dazu verläuft. Die seitlichen Begrenzungen der Windschutzscheibe werden durch so genannte A-Säulen der Fahrzeugkarosserie gebildet. Meistens erfüllt der Wischhebel auf der Fahrerseite des Kraftfahrzeugs diese Bedingungen.

Ferner werden immer längere Wischhebel mit immer längeren Wischblättern eingesetzt. Dabei ergeben sich durch die Wischwinkeltoleranzen sehr große Abstände zur A-Säule in der Umkehrlage des Wischhebels. Das bedeutet, dass bei der Wischfelddefinition für einen Wischhebel von etwa 1000 Millimetern Länge und einer Standardwischwinkeltoleranz von +/- 1,5 Grad im ungünstigen Fall ein ungewischter Bereich von 52 Millimetern Breite im Bereich der A-Säule zu berücksichtigen ist. Dies führt bei den heutigen Sichtfeldanforderungen zu Problemen.

Bei heute üblichen Scheibenwischeranlagen sitzt der Wischhebel mit einem Befestigungsteil auf einer Antriebswelle. Diese wird über eine Antriebskurbel und einen Kugelzapfen sowie über einen Hebelmechanismus von einem Wischermotor angetrieben. Ferner wird bei bekannten Scheibenwischeranlagen der Kugelzapfen als Exzenterkugelzapfen ausgebildet und auf der Antriebskurbel montiert. Am Ende der Fertigungslinie wird dann der Wischwinkel gemessen. Durch Verdrehen des Exzenters wird der wirksame Radius der Antriebskurbel so lange verändert, bis der Wischwinkel den geforderten Wert erreicht hat. Anschließend wird der Exzenterkugelzapfen mittels einer Kontermutter gesichert.

### Vorteile der Erfindung

Nach der Erfindung wird zunächst die Scheibenwischeranlage ohne den Exzenterkugelzapfen an die Fahrzeugkarosserie montiert. Danach wird ein Nietzapfen des Exzenterkugelzapfens in eine entsprechende Bohrung der Antriebskurbel eingesetzt und entsprechend dem optimalen Wischwinkel eingestellt, indem durch Drehen des Exzenterkugelzapfens um eine Zapfenachse des Nietzapfens der wirksame Radius zwischen der Gelenkachse des Exzenterkugelzapfens und einer Achse der Antriebswelle verändert wird. Schließlich wird der Nietzapfen in der Antriebskurbel fixiert. Durch das erfindungsgemäße Verfahren werden nicht nur die Toleranzen der Einzelteile der Scheibenwischeranlage berücksichtigt, sondern auch die durch das Kraftfahrzeug bedingten Toleranzen. Dadurch ist es möglich, Wischwinkeltoleranzen von +/- 0,5 Grad zu erreichen.

Gemäß einer Ausgestaltung der Erfindung wird vorgeschlagen, dass der Nietzapfen des Exzenterkugelzapfens nach dem Einstellen des Wischwinkels in der Antriebskurbel verprägt, verstemmt oder vernietet wird. Somit wird das Teil einfacher und die Einstellmutter entfällt, was insgesamt kostengünstiger ist.

Ferner besteht die Möglichkeit, dass der wirksame Radius, mit welchem der Exzenterkugelzapfen mittels einer Einstell- und Verstemmvorrichtung eingestellt wird, in einer Regelschleife anhand der Toleranzlage der Wischwinkel der bereits in gleichen Kraftfahrzeugen verbauten Wischeranlage und der Toleranzlage der Einzelteile der Scheibenwischeranlage ermittelt wird. Diese Erfahrungswerte lassen ausreichend genaue Rückschlüsse auf den konkreten Einbaufall zu, sodass auch mit dieser Maßnahme eine sehr niedrige Wischwinkeltoleranz eingehalten werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 einen schematischen Aufbau einer Scheibenwischeranlage,
Fig. 2 eine Antriebswelle mit einer Antriebskurbel und einem Exzenterkugelzapfen und
Fig. 3 einen Exzenterkugelzapfen in einem vergrößerten Maßstab.

### Beschreibung des Ausführungsbeispiels

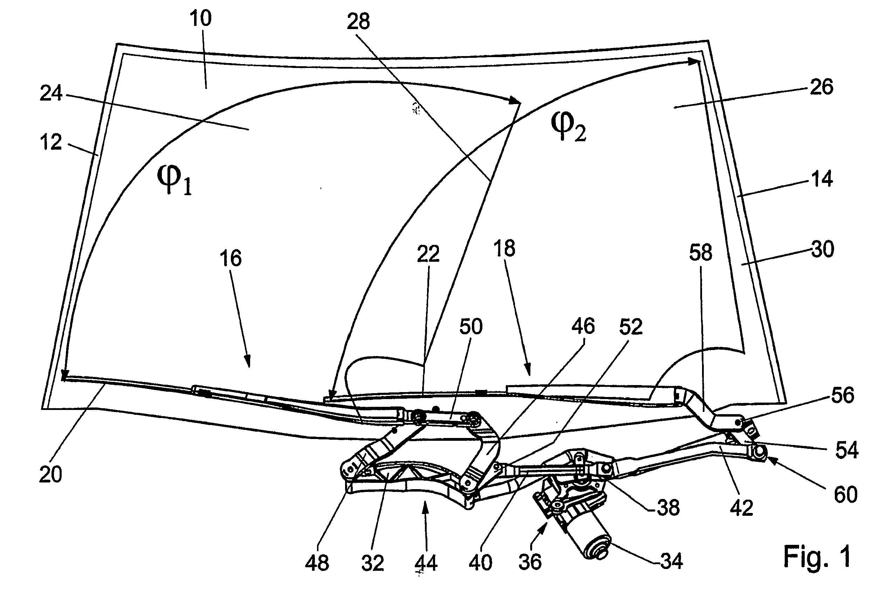

Bei Bedarf reinigt eine Scheibenwischeranlage eine Windschutzscheibe 10, die seitlich von zwei so genannten A-Säulen 12, 14 begrenzt wird. Sie besitzt zwei Wischhebel 16, 18, deren Wischblätter 20, 22 auf der Windschutzscheibe 10 Wischfelder 24, 26 überstreichen. In der Darstellung nach Fig. 1 nehmen die Wischhebel 16, 18 eine Parkposition in der Nähe des unteren Randes der Windschutzscheibe 10 ein. Bei der Wischbewegung überstreichen sie einen Wischwinkel ϕ₁, ϕ₂, der sich zwischen der gezeigten Parkposition und einer Umkehrlage 28, 30 der Wischhebel 16, 18 erstreckt.

Die Wischhebel 16, 18 werden von einem Wischermotor 34 über ein Getriebe 36, einer Motorkurbel 38 und einem Hebelgetriebe angetrieben. Die Antriebsteile sind an einer Platine 32 montiert, die an der Fahrzeugkarosserie befestigt wird. Das Hebelgetriebe für den Wischhebel 16 auf der Beifahrerseite des Fahrzeugs umfasst eine Gelenkstange 40 und eine Antriebskurbel 52, die einen Antriebshebel 46 eines Viergelenkhebelgetriebes 44 antreibt. Zu diesem gehören außerdem ein Lenker 48 und ein Koppelelement 50, mit dem der Wischhebel 16 verbunden ist. Durch das Viergelenkhebelgetriebe 44 wird eine Hubbewegung der Schwenkbewegung des Wischhebels 16 überlagert, sodass das Wischfeld 24 relativ weit in die obere Ecke der Windschutzscheibe 10 auf der Beifahrerseite reicht.

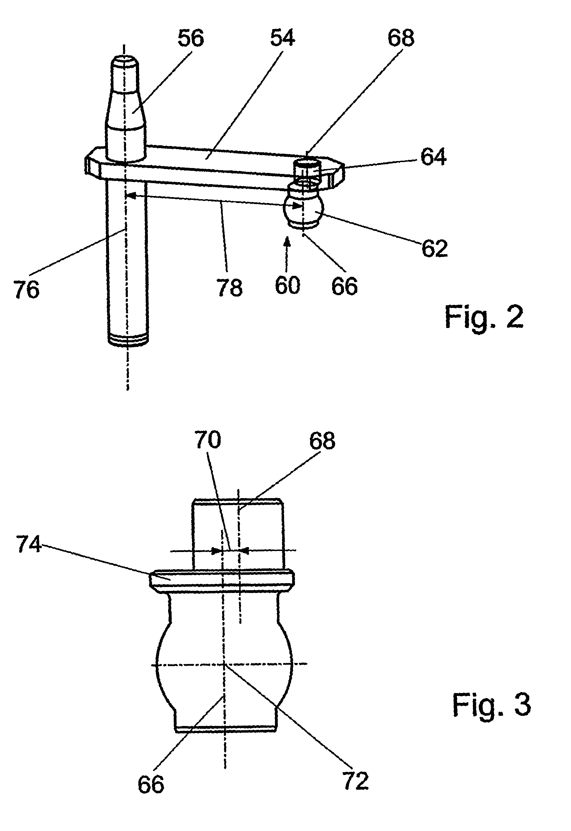

Das Hebelgetriebe für den Wischhebel 18 auf der Fahrerseite umfasst eine Gelenkstange 42, die über einen Exzenterkugelzapfen 60 an einer Antriebskurbel 54 angelenkt ist. Diese sitzt drehfest auf einer Antriebswelle 56, die in einem nicht dargestellten Lagergehäuse drehbar gelagert ist und auf der ein Befestigungsteil 58 des Wischhebels 18 sitzt. Die Umkehrlage 30 des Wischhebels 18 liegt nahe an der zugeordneten A-Säule 14 der Fahrzeugkarosserie und verläuft annähernd parallel zu dieser. Damit die ungewischte Fläche zwischen dem Wischfeld 26 und der A-Säule 14 nicht zu groß ist, aber das Wischblatt auch nicht an die A-Säule 14 anschlägt, wird der Wischwinkel ϕ₂ eingestellt. Hierzu wird zunächst die Scheibenwischeranlage ohne den Exzenterkugelzapfen 60 an das Kraftfahrzeug montiert und dann der wirksame Radius 78 (Fig. 2) zwischen einer Gelenkachse 66 des Kugelzapfens 62 und der Achse 76 der Antriebswelle 56 so verändert, bis der optimale Wischwinkel ϕ₂ erreicht ist. Hierzu wird der Nietzapfen 64, dessen Zapfenachse 68 um eine Exzentrizität 70 radial versetzt und parallel zur Gelenkachse 66 verläuft, um die Zapfenachse 68 gedreht. Ist die richtige Einstellung gefunden, wird der Nietzapfen 64 relativ zur Antriebskurbel 54 fixiert, indem er zweckmäßigerweise mit dieser verprägt, verstemmt oder vernietet wird. Dabei liegt der Kugelzapfen 62 mit einem Anlagebund 74 an der Antriebskurbel 54 an. Am Kugelzapfen 62 ist die Gelenkstange 42 angelenkt, wobei die Kugelmitte 72 gleichzeitig die Mitte des Gelenks ist.

In Fig. 2 ist der Exzenterkugelzapfen 60 zum Inneren des Kraftfahrzeugs gerichtet. Er kann auch alternativ nach außen weisen. Ebenso kann die Kurbel 54, die nach Fig. 2 im Bereich des äußeren Endes der Antriebswelle 56 angeordnet ist, alternativ am inneren Ende der Antriebswelle 56 vorgesehen werden.

## Patentansprüche

1. Verfahren zum Einstellen eines Wischwinkels (ϕ₁, ϕ₂) zwischen einer Parkposition und einer Umkehrlage (28, 30) eines Wischhebels (16, 18) einer Scheibenwischeranlage für ein Kraftfahrzeug mit mindestens einem Wischhebel (18), dessen Parkposition oder Umkehrlage (30) annähernd parallel zu einer A-Säule (14) einer Fahrzeugkarosserie verläuft, die eine Windschutzscheibe (10) seitlich begrenzt, wobei der Wischwinkel (ϕ₂) mittels eines Exzenterkugelzapfens (60) eingestellt wird, der an einem freien Ende einer Antriebskurbel (54) angeordnet ist und diese über eine Gelenkstange (42) gelenkig mit einer Motorkurbel (52) verbindet, während das andere Ende der Antriebskurbel (54) drehfest auf einer Antriebswelle (56) sitzt, die ein Befestigungsteil (58) des Wischhebels (18) antreibt, **dadurch gekennzeichnet, dass** die Scheibenwischeranlage zunächst ohne den Exzenterkugelzapfen (60) an die Fahrzeugkarosserie montiert wird, dass danach ein Nietzapfen (64) des Exzenterkugelzapfens (60) in eine entsprechende Bohrung der Antriebskurbel (54) eingesetzt wird, dass der optimale Wischwinkel (ϕ₂) ermittelt und eingestellt wird, indem durch Drehen des Exzenterkugelzapfens (60) um eine Zapfenachse (68) des Nietzapfens (64) der wirksame Radius (78) zwischen einer Gelenkachse (66) des Exzenterkugelzapfens (60) und einer Achse (76) der Antriebswelle (56) verändert wird, und dass schließlich der Nietzapfen (64) in der Antriebskurbel (54) in der eingestellten Position fixiert wird.

2. Verfahren nach Anspruch 1, **dadurch gekennzeichnet, dass** der Nietzapfen (64) des Exzenterkugelzapfens (60) nach dem Einstellen des Wischwinkels (ϕ₂) in der Antriebskurbel (54) verprägt, verstemmt oder vernietet wird.

3. Verfahren nach Anspruch 1 oder 2, **dadurch gekennzeichnet, dass** der wirksame Radius (78), mit welchem der Exzenterkugelzapfen (60) mittels einer Einstell-und Verstemmvorrichtung eingestellt wird, in einer Regelschleife anhand der Toleranzlage der Wischwinkel (ϕ₂) der bereits in gleichen Kraftfahrzeugen verbauten Wischeranlagen und der Toleranzlage der Einzelteile der Wischeranlage ermittelt wird.

## Claims

1. Method for adjusting a wiping angle (ϕ₁, ϕ₂) between a parking position and a reversal position (28, 30) of a wiper arm (16, 18) of a wiper system for a motor vehicle with at least one wiper arm (18), the parking position or reversal position (30) of which runs approximately parallel to an A pillar (14) of a vehicle body which laterally delimits a windscreen (10), wherein the wiping angle (ϕ₂) is adjusted by means of an eccentric ball pivot (60) which is arranged at a free end of a driving crank (54) and connects the latter in an articulated manner via an articulated rod (42) to a motor crank (52) while the other end of the driving crank (54) sits in a rotationally fixed manner on a drive shaft (56) which drives a fastening part (58) of the wiper arm (18), **characterized in that** the wiper system is initially fitted onto the vehicle body without the eccentric ball pivot (60), **in that** then a rivet pin (64) of the eccentric ball pivot (60) is inserted into a corresponding bore in the driving crank (54), **in that** the optimum wiping angle (ϕ₂) is determined and adjusted by the effective radius (78) between an axis of articulation (66) of the eccentric ball pivot (60) and an axis (76) of the drive shaft (56) being changed by rotation of the eccentric ball pivot (60) about an axis (68) of the rivet pin (64), and **in that** finally the rivet pin (64) is fixed in the driving crank (54) in the adjusted position.

2. Method according to Claim 1, **characterized in that**, after the wiping angle (ϕ₂) is adjusted, the rivet pin (64) of the eccentric ball pivot (60) is stamped, caulked or riveted in the driving crank (54).

3. Method according to Claim 1 or 2, **characterized in that** the effective radius (78) by which the eccentric ball pivot (60) is adjusted by means of an adjusting and caulking device is determined in a control loop with reference to the tolerance position of the wiping angles (ϕ₂) of the wiper systems already installed in like motor vehicles and the tolerance position of the individual parts of the wiper system.

## Revendications

1. Procédé de réglage de l'angle d'essuyage (ϕ₁, ϕ₂) entre une position de rangement et une position d'inversion de mouvement (28, 30) d'un levier d'essuie-glace (16, 18) d'une installation d'essuie-glace d'un véhicule automobile comportant au moins un levier d'essuie-glace (18) dont la position de rangement ou la position d'inversion (30) sont pratiquement parallèles à la colonne A (14) de la carrosserie du véhicule, colonne qui limite latéralement le pare-brise (10),
l'angle d'essuyage (ϕ₂) se réglant à l'aide d'un goujon à bille excentrée (60) prévu à l'extrémité libre d'une manivelle d'entraînement (54) et qui relie celle-ci de manière articulée à la manivelle (52) du moteur par une tringlerie articulée (42) alors que l'autre extrémité de la manivelle d'entraînement (54) est installée solidairement en rotation sur l'arbre d'entraînement (56) qui entraîne une pièce de fîxation (58) du levier d'essuie-glace (18),
**caractérisé en ce que**
l'installation à levier d'essuie-glace est tout d'abord montée sur la carrosserie du véhicule sans le goujon à bille excentrée (60),
puis, on place une tête de rivet (64) du goujon à bille excentrée (60) dans un perçage correspondant de la manivelle d'entraînement (54) pour déterminer et régler de manière optimale l'angle d'essuyage (ϕ₂) **en ce qu'**en tournant le goujon à bille excentrée (60) autour de l'axe (68) de la tête de rivet (64), on modifie le rayon actif (78) entre l'axe d'articulation (66) du goujon à bille excentrée (60) et l'axe (76) de l'arbre d'entraînement (56), et
finalement, on bloque la tête de rivet (64) dans la manivelle d'entraînement (54) dans la position réglée.

2. Procédé selon la revendication 1,
**caractérisé en ce qu'**
on déforme, sertie ou fixe la tête de rivet (64) du goujon à bille excentrée (60) après le réglage de l'angle d'essuyage (ϕ₂) dans la manivelle d'entraînement (54).

3. Procédé selon l'une quelconque des revendications 1 ou 2,
**caractérisé en ce qu'**
on règle le rayon actif (78) par lequel un dispositif de réglage et de matage règle le goujon à bille excentrée (60), dans une boucle de régulation à l'aide de la position de tolérance de l'angle d'essuyage (ϕ₂) de l'installation d'essuie-glace déjà montée dans des mêmes véhicules et on détermine la position de tolérance des composants de l'installation d'essuie-glace.
